# EUROPEAN PATENT SPECIFICATION

(11) **EP 3 586 624 B1**
(45) Date of publication and mention of the grant of the patent: **01.09.2021**
(21) Application number: 18204811.6
(22) Date of filing: 07.11.2018
(51) Int. Cl.: A01M 1/20

(54) **AUTOMOBILE HIGH-TEMPERATURE PEST EXTERMINATION DEVICE**
KRAFTFAHRZEUG-HOCHTEMPERATUR-SCHÄDLINGSBEKÄMPFUNGSVORRICHTUNG
DISPOSITIF D'EXTERMINATION D'INSECTES NUISIBLES À HAUTE TEMPÉRATURE POUR AUTOMOBILES

(30) Priority: 29.06.2018 JP 2018124966; 20.09.2018 JP 2018176409
(43) Date of publication of application: 01.01.2020
(73) Proprietor: Kabushiki Kaisha Nihon Yushutsu Jidousha Kensa Center, Yokohama-shi, Kanagawa (JP)
(72) Inventor: JACKSON, Damon Scott, Yokohama-shi,, Kanagawa (JP)
(74) Representative: TBK

(56) References cited:
- WO-A1-95/34414
- WO-A2-2008/006035
- US-A- 4 961 283
- US-A1- 2005 108 920
- US-A1- 2009 211 148
- US-A1- 2015 128 483

## Description

The present invention relates to an automobile high-temperature pest extermination device which exterminates pests attached to automobiles by a high-temperature treatment.

When exporting goods, if insects or the like native to the country of export are attached to the export goods, transportation vessel, etc., problems such as adverse impact on the ecosystem of the destination country by such insects or the like as invasive organisms may occur. In particular, damage to agricultural crops by these types of invasive organisms is serious. Such invasive organisms are treated as pests, and as a result, unloading of the export goods in the export destination country may not be permitted. Thus, strict quarantine of export goods is necessary.

For example, in recent years, in New Zealand, the attachment of brown marmorated stink bugs to automobiles exported from Japan was confirmed. It is known that these stink bugs are difficult to find, extermination thereof is difficult, the bugs' fertility rates are high, etc. In New Zealand, where agriculture is extensive, stinkbugs are of particular interest as pests to be exterminated. As a result, transport vessels that have confirmed that stink bugs have attached thereto have been forced to leave the country, bringing about a deterioration in the export situation of automobiles from Japan.

New Zealand has become a very important automobile export market for Japan since automobiles are not domestically produced. Thus, the deterioration in the export situation of automobiles from Japan not only has a significant impact on the Japanese economy, but it also hurts New Zealand's economy, which depends on the export automobiles from Japan for domestic distribution. Thus, the construction of a means for reliably exterminating pests represented by these stink bugs is an urgent matter.

Generally, when pests are exterminated, fumigation using an agent such as alkyl iodide is performed (refer to, for example, document JP 2003-267803 A). However, since automobiles are precision machines, pest extermination by means of a fumigation agent can adversely affect various components of the automobile, or the fumigation agent may remain in the filter or the like of the air conditioner, which can cause unpleasant odors, which is not preferable.

Furthermore, fumigation treatment takes several days, and costs increase due to the use of the fumigation agent. Thus, in particular in the export of automobiles, in which hundreds of thousands of exported vehicles per year are subjected to treatment, pest extermination by fumigation is too time-consuming and it is necessary to secure an enormous treatment facility to facilitate such a large number of automobiles. Appropriate pest extermination of export automobiles thereby is virtually impossible. Thus, there is a need for a new method capable of efficiently and reliably exterminating pests for the treatment of a large number of export automobiles.

Document US 2009/0211148 A1 discloses a mobile pest eradication device for heat treating wood comprising a chamber having a first end, a second end, a floor, a ceiling, a first side walls, a second side wall, and a rear wall located at said second end. At least one door is provided at said first end of said chamber to permit access to said chamber. A heating sub-chamber is located within said chamber at said second end. A treatment sub-chamber is arranged between said heating sub-chamber and said first end. At least one heater is arranged within said heating sub-chamber. An interior wall having a top and base is situated between said heating sub-chamber and said treatment sub-chamber and configured such that said interior wall extends from said floor to said ceiling and extends from said first sidewall to said second sidewall. An air outlet at the top of said interior wall permits heated air to flow into said treatment sub-chamber. An air return at the base of said interior wall allows air to exit said treatment sub-chamber and to re-enter said heating sub-chamber. A deflecting baffle is arranged within said heating sub-chamber, said deflecting baffle being sloped upward from said rear wall to said ceiling to direct heated air toward said heated air outlet. Moreover, means for fueling and igniting said heater, a control unit for controlling said heater, said control unit comprising a processor and thermostatic software, and temperature sensors in said chamber arranged to communicate with said control unit, are provided.

Document WO 2008/006035 A2 pertains to methods of sanitizing structures, buildings, passenger occupiable vehicles, and other enclosed or enclosable spaces. More particularly, the present invention relates to a method for killing and/or removing pests and their allergens, bacteria, viruses, fungi, molds, volatile organic compounds and other dangerous substances, from such enclosures.

Document US 4 961 283 A discloses a method of killing space occupying insects which are in occupancy in hidden void spaces, which void spaces are formed by a plurality of structural elements. Said elements have a void space facing surface, and at least one of said elements having a living space facing surface, and said elements having dimensions of thickness and length to form structure around said void spaces. Said insects have the inherent characteristic of susceptibility to a lethal temperature which if maintained for a necessary period of time causes the death of said insects. The method comprises heating said hidden void space to said lethal temperature by the application of heated gas, and maintaining said lethal temperature for said period of time by heating said living space facing surface and thereby heating its respective structural element to heat its respective void space facing surface, and thereby heating said hidden void space to exterminate the insects therein; circulating said heated gas.

The present invention was made in light of these problems and aims to provide an automobile high-temperature pest extermination device which can efficiently exterminate pests by a high-temperature treatment without the use of a fumigation agent.

The invention is defined by the claims.

Further, the rectification member can circulate the air in the chamber in the horizontal directions.

According to the invention, a plurality of treatment chambers can be connected in series as a connectable treatment unit so as to house a plurality of to-be-treated automobiles therein.

According to the invention, a plurality of the treatment chambers, which are connected in series, can be arranged in parallel rows.

According to the invention, a centralized management part for collectively managing the operations of the plurality of treatment chambers can be comprised.

According to the automobile high-temperature pest extermination device according to the first invention, since the device for applying, for a predetermined interval, heated air which has been heated to a pest extermination temperature to a to-be-treated automobile which is housed in a freely accessible manner in a treatment chamber to exterminate pests inside the automobile includes a circulation fan device arranged in the treatment chamber, a suction part of which is oriented toward the interior of the treatment chamber, a heating member mounted in a discharge part of the circulation fan device, and a rectification member for adjusting the flow direction of the heated air delivered into the chamber via the heating member, not only can pests be exterminated by a high-temperature treatment without the use of a fumigation agent, but also by providing a circulation fan device and heating member in the treatment chamber and circulating and distributing heated air, the efficiency of the overall process including the temperature rise to the pest extermination temperature and maintaining the temperature can be greatly improved, whereby cost can be reduced.

According to the automobile high-temperature pest extermination device according to the invention, since the rectification member circulates the air in the chamber in the horizontal directions, the interior of the treatment chamber can be efficiently heated and heated air can be effectively brought into contact with the interior and exterior of box-type automobiles having a floor plate and a roof plate, whereby appropriate pest extermination can be performed.

According to the automobile high-temperature pest extermination device according to the second invention, in the first invention, a plurality of treatment chambers are connected in series as a connectable treatment unit so as to house a plurality of to-be-treated automobiles therein. Thus, since each treatment chamber includes a circulation fan device and a heating member for circulating and distributing heated air, a large number of various types of to-be-treated automobiles can be efficiently treated and adaptation to the size of the installation location becomes easy, whereby versatility is improved.

According to the automobile high-temperature pest extermination device according to the third invention, in the second invention, since a plurality of the treatment chambers, which are connected in series, are arranged in parallel rows, it is possible to treat a large number of to-be-treated automobiles.

According to the automobile high-temperature pest extermination device according to the fourth invention, in the second or third invention, since a centralized management part for collectively managing the operations of the plurality of treatment chambers is included, it is possible to properly perform high-temperature treatment on a large number of to-be-treated automobiles, simplifying the management of the high-temperature treatment and improving processing efficiency.

### BRIEF DESCRIPTION OF DRAWINGS

FIG. 1 is a schematic cross-sectional view of an automobile high-temperature pest extermination device according to an embodiment of the present invention.
FIG. 2 is a schematic view of a high-temperature pest extermination device in which a plurality of treatment chambers are connected.
FIG. 3 is a perspective view of a circulation fan device.
FIG. 4 is a schematic view of a high-temperature pest extermination device in which a plurality of treatment chambers are arranged in parallel rows.
FIG. 5 is a graph of changes in heating temperatures during high-temperature treatments.

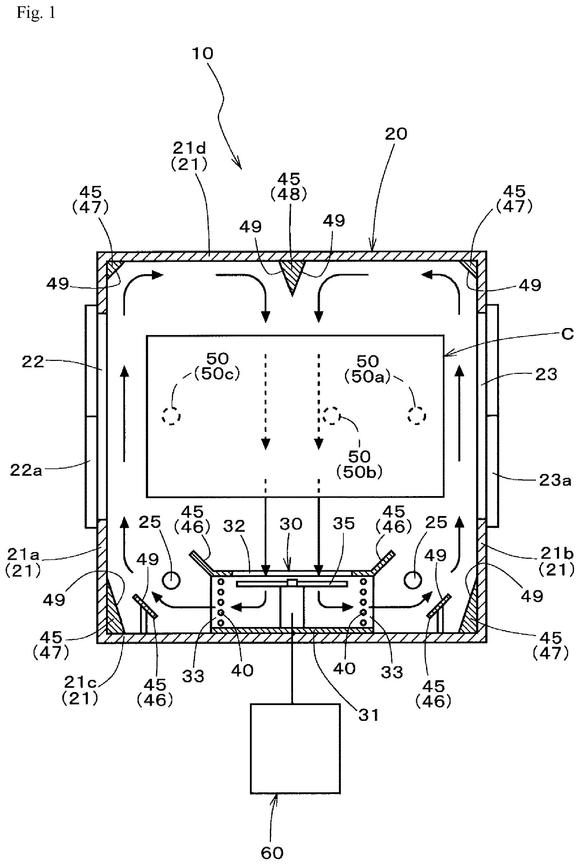

FIG. 1 shows an automobile high-temperature pest extermination device 10 according to an embodiment of the present invention, comprising a treatment chamber 20, a circulation fan device 30, heating members 40, and rectification members 45. Reference sign C represents a to-be-treated automobile, reference numeral 50 represents vehicle interior temperature detection means, and reference numeral 60 represents heating temperature control means. The high-temperature pest extermination device 10 is a device for exterminating pests attached to the interior or exterior of a to-be-treated automobile C, which is a conventional automobile such as a passenger car or truck, by a high-temperature treatment. The to-be-treated automobile C is, in particular, an automobile for export. The high-temperature pest extermination device 10 is mounted in a facility, such as a quarantine inspection facility or the like, at the port at which loading of automobiles for export is carried out. Target pests for extermination include insects such as stink bugs, cockroaches, weevils, moths, grasshoppers, flies, aphids, and includes larvae and eggs in addition to adult insects.

As shown in FIG. 1, the treatment chamber 20 provides an enclosed space into and from which a to-be-treated automobile C can be received and discharged and in which the high-temperature treatment can be performed on the to-be-treated automobile C received therein. The treatment chamber 20 is composed of a ceiling, floor, and side wall, each of which is made of a wall material having heat resistance and thermal insulation properties. An inlet 22 and an outlet 23 for receiving and discharging the to-be-treated automobile C, respectively, are formed in the side wall 21. The inlet 22 and the outlet 23 are arranged opposite each other and the to-be-treated automobile C can pass straight through the chamber from the inlet 22 to the outlet 23. Furthermore, the inlet 22 and the outlet 23 may be formed by the same opening through which the to-be-treated automobile C, which is advanced (or reversed), can be loaded into the treatment chamber 20, and the to-be-treated automobile C, which is reversed (or advanced), can be discharged from the treatment chamber 20. Self-propulsion or a transport means such as a conveyor can be appropriately used for the loading of the to-be-treated automobile C into the treatment chamber 20. In FIG. 1, reference numeral 21a represents a first side wall part in which the inlet 22 is provided, 21b represents a second side wall part facing opposite the first side wall part 21a, 21c represents a third side wall part on which a circulation fan device 30, which is described later, is arranged, and 21d represents a fourth side wall part facing opposite the third side wall part 21c. Reference numeral 22a represents a loading door part for opening and closing the inlet 22 and 23a represents a discharge door part for opening and closing the outlet 23.

As shown in FIG. 1, a chamber interior temperature detection means 25 for detecting the temperature inside the chamber is arranged in the treatment chamber 20. Any known temperature sensor can be used as the chamber interior temperature detection means 25. The chamber interior temperature detection means 25 is preferably mounted in an area in which the temperature is high as compared to the other areas in the treatment chamber 20. The installation location of the chamber interior temperature detection means 25 is, for example, in the vicinity of the discharge parts 33 of the circulation fan device 30, which is described later and which corresponds to a heated air generation source. Thus, by performing temperature detection in areas in which the temperature is high as compared to other areas, it can be assumed that the temperature inside t the treatment chamber 20 as a whole is not higher than the temperature detected by the chamber interior temperature detection means 25. Furthermore, the temperature inside the chamber can be more accurately estimated by mounting chamber interior temperature detection means 25 in several locations within the treatment chamber 20.

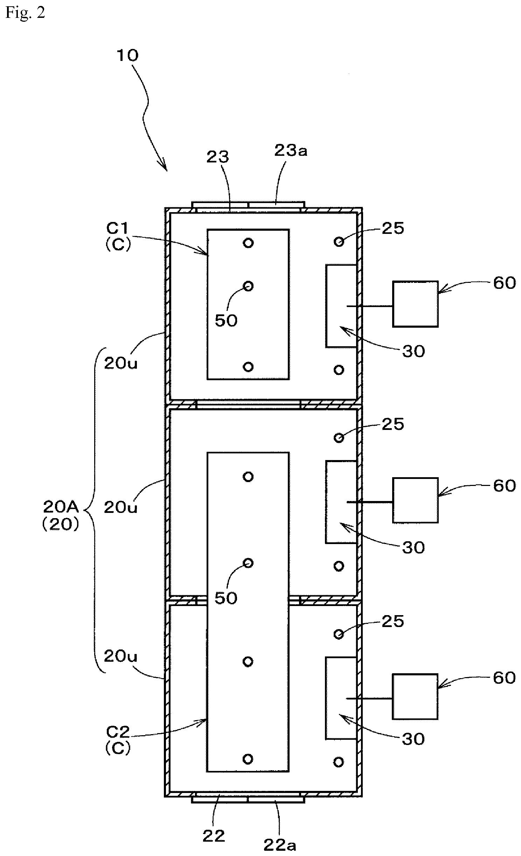

The size of the treatment chamber 20 can be appropriately selected in accordance with the size of the to-be-treated automobile C, the number of to-be-treaded automobiles to be treated, the size of the installation location, processing efficiency, etc. Furthermore, as shown in FIG. 2, the treatment chamber 20 may be capable of accommodating a plurality of to-be-treated automobiles C, C by connecting a plurality of connectable units 20u, 20u, 20u in series (20 A). In the illustrated example, the treatment chamber 20A, in which three units 20u, 20u, 20u are connected, houses a to-be-treated automobile C1, such as an ordinary passenger car, and a to-be-treated automobile C2 which is larger than the to-be-treated automobile C1, such as a bus. In the treatment chamber 20A, a large to-be-treated automobile C2 is housed in a plurality (two in the illustrated example) of units 20u, 20u. In other words, it is not necessary that a single unit 20u correspond to a single to-be-treated automobile C. Rather, housing can be performed in any way as long as the to-be-treated automobile can be housed within the connected treatment chamber 20A. Therefore, by connecting a plurality of treatment chambers (20u, 20u, 20u), the housing space for the to-be-treated automobiles C within the treatment chamber 20 can be freely adjusted. Thus, adaptation to the number of to-be-treated automobiles C and the size of the installation location becomes easy, whereby versatility is improved. Note that in the illustrated example, the units 20u, 20u are connected via the side wall parts. However, the side wall parts may be configured to be detachable, such that the units 20u, 20u may be directly connected to each other at the time of connection without being connected via the side wall parts.

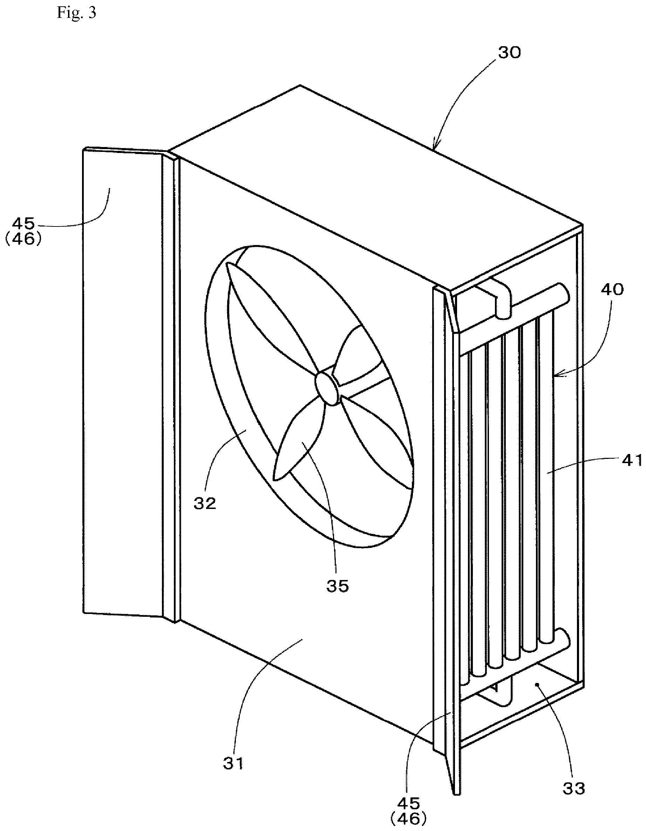

As shown in FIG. 1, the circulation fan device 30 is arranged inside the treatment chamber 20, circulates and distributes heated air in the treatment chamber 20, and operates to prevent unevenness in the heating of the chamber to maintain a substantially uniform heating temperature. As shown in FIGS. 1 and 3, the embodied circulation fan device 30 comprises a suction part 32, a discharge part 33, and a large propeller fan 35, which is a fan member. In the drawings, reference numeral 31 represents the housing member of the circulation fan device 30. The circulation fan device 30 is arranged on the side wall part 21 (the third side wall part 21c) of the treatment chamber 30 so that the suction part 32 formed in the front surface of the housing member 31 faces towards the interior of the treatment chamber.

As shown in FIGS. 1 and 3, the fan member 35 is in the form of a suction fan which is arranged so as to face the interior of the treatment chamber 20 and which suctions air inside the treatment chamber 20 via the suction part 35. The form of the fan member 35 may appropriately have two blades, three blades, four blades, or the like. The size of the fan member 35 may be appropriately selected in accordance with the size of the treatment chamber 20, heating efficiency, etc., and in the present embodiment, the fan member 35 is large-sized, having a diameter of, for example, about 1000 mm to 1500 mm. One or a plurality (one in the illustrated example) of fan members 35 may be provided in accordance with the size of the treatment chamber.

The heating member 40 is a member for heating the air suctioned by the fan member 35. Heating members 40 are arranged in the discharge parts 33, which are described later. Any known heating device such as a heat exchanger, such as steam piping or hot water piping, or an electric wire heater, may be used as the heating member 40. The heating member 40 shown in FIG. 3 is a steam piping-type heat exchanger in which a plurality of straight tubular piping members 41 are arranged in parallel to allow steam to flow through each piping member 41. Since a plurality of piping members 41 are formed in a straight pipe shape and arranged in parallel, the occurrence of temperature unevenness upon heating is suppressed, whereby thermal efficiency is improved.

As shown in FIGS. 1 and 3, the discharge parts 33 are opening parts for ventilation which are formed by fully opening both side portions of the housing member 31 of the circulation fan device 30. The heated air which is suctioned by the fan member 35 and heated by the heating members 40 is discharged from the treatment chamber 20 through the discharge parts 33. Furthermore, rectification members 45 for adjusting the flow direction of the heated air discharged into the chamber are provided in the discharge parts 33. The rectification members 45 are wind direction restriction parts 46 which are provided on both ends of the front of the housing member 31 and which are formed of plate-shaped members which are bent and extend from the end parts toward the front side. The rectification members 45 formed from the wind direction restriction parts also serve as guides for discharging the heated air from the discharge parts 33 in a straight forward direction without diffusing and for allowing the air in the chamber to flow into the suction part 32. Note that, though not illustrated, discharge fan members may be arranged in the discharge parts 33 as necessary. By arranging discharge fan members in the discharge parts 33, the discharge of heated air can be further promoted.

As shown in FIG. 1, since the circulation fan device 30 described above is arranged so that the fan member 35 faces the interior of the treatment chamber 20, heated air is circulated in the horizontal directions in the treatment chamber 20. In particular, first, air in the treatment chamber 20 is suctioned by the fan member 35 from the suction part 32 on the front side of the circulation fan device 30. This suctioned air is discharged toward both sides of the circulation fan device 30 via the discharge parts 33 on the rear side of the fan member 35. At this time, the air is heated while passing through the heating members 40 arranged in the discharge parts 33, and the heated air is discharged from the interior of the treatment chamber 20 through the discharge parts 33. The heated air discharged from the discharge parts 33 circulates along the walls of the chamber 20.

The air volume and air speed of the fan member 35 of the circulation fan device 30 will be described. Since the fan member 35 of the present embodiment is a large-sized propeller fan having a diameter of about 1000 mm to 1500 mm, the air volume thereof is 1500 m³ per minute, and the average air speed is 5.8 m per second, a degree at which the leaves and branches of a tree would shake (wind power 2). The treatment chamber of the present embodiment, in the case of a large chamber, has a volume of 391 m³, and in the case of a small chamber, has a volume of 346 m³. In accordance with experimentation, an air speed of heated air of 4 to 7 m/sec (wind power 2 to 3) is preferred, since the heat treatment can be efficiently performed at such an air speed. In the present embodiment, since the efficiency of raising and maintaining the heat treatment temperature (60 to 80 °C) is good, the processing time of the entire process can be drastically reduced to about 30 minutes or less.

Next, the circulation and distribution of heated air within the heating chamber will be described. Heated air discharged from the discharge parts 33 circulates along the side walls of the treatment chamber 20, as described above. The heated air circulating in the direction of the first side wall part 21a of FIG. 1 then circulates in the direction of the fourth side wall part 21d along the first side wall part 21a. Further, heated air circulating in the direction of the second side wall part 21b then circulates in the direction of the fourth side wall part 21d along the second side wall part 21b bilaterally symmetrically with the heated air circulating in the direction of the first side wall part 21b. The first side wall part 21a side heated air and the second side wall part 21b side heated air combine in the central part of the fourth side wall part 21d, circulate in the central direction of the treatment chamber 20, and are suctioned by the fan member 35 of the circulation fan device 30 toward the circulation fan device 30.

Thus, the circulation fan device 30 creates a flow of air from the third side wall part 21c to the fourth side wall part 21d along the side wall part 21 of the treatment chamber 20 by suctioning air inside the treatment chamber through the suction part 32 on the front side of the circulation fan device 30 by the fan member 35 and discharging the air as heated air from the discharge parts 33 on both sides. Further, since the heated air circulated on the fourth side wall part 21d side is again suctioned by the fan member 35, the heated air in the treatment chamber 20 is circulated. Since the discharge parts 33 are formed by fully opening the side parts of the circulation fan device 30, the discharged heated air is circulated in the treatment chamber 20 in the substantially horizontal directions.

When the heated air is circulated by the circulation fan device 30, as shown in FIG. 1, rectification members 45 for adjusting the flow direction of the heated air are preferably arranged in various locations within the treatment chamber 20. The rectification members 45 each include a wind receiving surface 49 angled in a predetermined direction with respect to the flow direction of the heated air. The wind receiving surfaces 49 guide the flow direction in the direction of inclination when the heated air collides with the wind receiving surfaces 49 of the rectification members 45. The rectification members 45 of the present embodiment include wind direction auxiliary parts 47 arranged in the corners of the treatment chamber 20, and a wind direction auxiliary part 48 arranged in the vicinity of the junction of the heated air from the first side wall part 21a side and the heated air from the second side wall part 21b side, as well as wind direction restriction parts 46 consisting of plate-like members disposed in the vicinity of the discharge parts 33 of the circulation fan device 30. The heated air discharged from the circulation fan device 30 can be more efficiently circulated and distributed within the treatment chamber by providing the wind direction restriction parts 46 and the wind direction auxiliary parts 47, 48 of the rectification members 45.

Next, as shown in FIG. 1, vehicle interior temperature detection means 50 are members which are mounted inside the to-be-treated automobiles C and which detect the vehicle interior temperature. A known temperature sensor is used as the vehicle interior temperature detection means 50. Vehicle interior temperature detection means 50 are appropriately mounted in a position which is relatively resistant to heating or a position which is relatively easily heated. Positions which are relatively resistant to heating include the interior of the engine compartment, under the seats, etc., of the to-be-treated automobile C, and are positions (low-temperature positions) at which the temperature tends to be lowest compared with other positions within the to-be-treated automobile C at the time of high-temperature treatment. Furthermore, positions which are relatively easily heated include on the seat, etc., of the to-be-treated automobile C, and are positions (high-temperature positions) at which the temperature tends to be highest as compared to the other positions within the to-be-treated automobile C at the time of high-temperature treatment.

By detecting the temperature at positions (low-temperature positions) at which the temperature tends to be lowest compared with other positions within the to-be-treated automobile C using the vehicle interior temperature detection means 50, it is possible to assume that the vehicle interior temperature of the to-be-treated automobile C as a whole is not less than the temperature detected by the vehicle interior temperature detection means 50. Furthermore, by detecting the temperature at positions (high-temperature positions) at which the temperature tends to be highest compared with other positions within the to-be-treated automobile C using the vehicle interior temperature detection means 50, it is possible to assume that the vehicle interior temperature of the to-be-treated automobile 50 as a whole is not less than the temperature detected by the vehicle interior temperature detection means 50. By mounting vehicle interior temperature detection means 50 in both the positions (low-temperature positions) which are resistant to heating and the positions (high-temperature positions) which are easily heated and detecting the temperatures thereof, it is possible to assume that the vehicle interior temperature of the to-be-treated automobile C as a whole is not less than the temperature detected at the low-temperature positions and not greater than the temperature detected at the high-temperature positions. Note that vehicle interior temperature detection means 50 are preferably arranged in several locations within the to-be-treated automobile C. By detecting the vehicle interior temperatures at several locations, the vehicle interior temperature of the to-be-treated automobile C can be more accurately estimated.

As shown in FIG. 1, the heating temperature control means 60 is mounted outside the treatment chamber 20 and controls the heating temperature of the circulation fan device 30 based on the vehicle interior temperature detection means 50. Any known control device can be used as the heating temperature control means 60. Insects such as stink bugs, which are extermination target pests, are weak against high temperatures. Such insects are killed by exposure to high temperatures of, for example, 50 °C or higher. It is thought that the proteins within the body of the pests solidify due to the high temperatures. However, the to-be-treated automobiles C are precision machinery and utilize members made of resins in various places. Thus, exposure to high temperatures for long periods adversely affects various equipment and members, etc., which may cause damage such as breakdown, damage, or deterioration. In order to avoid adverse effects on the to-be-treated automobiles C due to the high temperatures, the heating treatment is set to 80 °C or less. The heating temperature control means 60 controls so as to restrict the vehicle interior temperature of the to-be-treated automobile C detected by the vehicle interior temperature detection means 50 to 50 to 80 °C, more preferably 60 to 75 °C. Control of the circulation fan device 30 is performed by adjusting the rotation speed of the fan member 35, the amount of steam provided to the circulation fan device 30, etc.

The heating temperature control means 60 controls the heating temperature of the circulation fan device 30 based on the chamber interior temperature detection means 25 along with the control of the circulation fan device 30 based on the vehicle interior temperature detection means 50. The chamber interior temperature detected by the chamber interior temperature detection means 25 is estimated to be the highest temperature within the treatment chamber 20, and thus corresponds to the temperature upper limit of the chamber interior temperature. Further, the chamber interior temperature corresponds to the vehicle exterior temperature of the to-be-treated automobile C, and thus impacts pest extermination of the exterior of the to-be-treated automobile C, damage due to the high temperature, or the like. Thus, in the same manner as the vehicle interior temperature, the heating temperature control means 60 control so as to restrict the chamber interior temperature (the vehicle exterior temperature of the to-be-treated automobile C) within the treatment chamber detected by the chamber interior temperature detection means 25 to 50 to 80 °C or less, more preferably 60 to 75 °C. Note that in the case of the treatment chamber 20A, in which a plurality of units 20u are connected, since it is necessary to manage the chamber interior temperature as the entire treatment chamber 20A (all units), it is preferable to collectively control the detection temperature based on the chamber interior temperature detection means of each unit 20u.

Control of the treatment duration of the high-temperature treatment is performed by the heating temperature control means 60. The treatment duration of the high-temperature treatment is set in accordance with the size or the number of the to-be-treated automobiles C, etc., and is, for example, about 10 to 20 minutes after the vehicle interior temperature of the to-be-treated automobile C reaches a predetermined temperature. By selected this treatment duration, extermination target pests can be reliably killed, and processing efficiency and cost are also preferable. In the present embodiment, since the efficiency of raising and maintaining the heat treatment temperature (60 to 80 °C) is high, as described above, the overall treatment duration can be shortened to about 30 minutes or less.

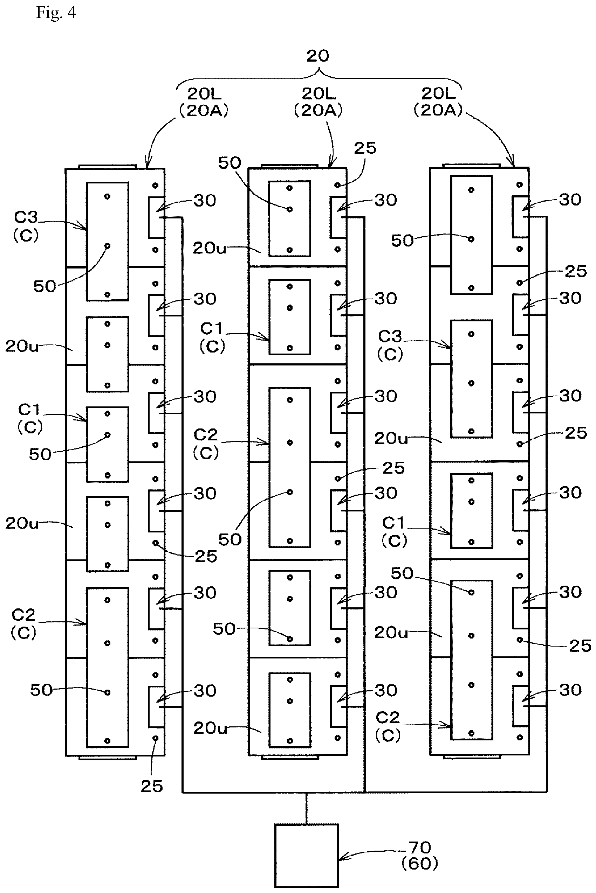

In the high-temperature pest extermination device 10 of the present invention, as shown in FIG. 4, a plurality of treatment chambers are arranged in parallel rows (20L, 20L, 20L), whereby high-temperature treatment can be performed on a plurality of to-be-treated automobiles C. The plurality of treatment chambers arranged in parallel rows 20L, 20L, 20L may be composed of a plurality of connectable units 20u connected in series (treatment chamber 20A). The illustrated example includes three rows of treatment chambers 20L, 20L, 20L each composed of a treatment chamber 20A in which six units 20u are connected in a single row. Each row of the treatment chambers 20L, 20L, 20L irregularly houses a small to-be-treated automobile C1, a large to-be-treated automobile C2, and a medium to-be-treated automobile C3. By arranged a plurality of connected treatment chambers 20A in parallel rows, high-temperature treatment can be performed on a larger number of to-be-treated automobiles, whereby processing efficiency can be increased. Note that, in the present embodiment, when five units were connected and four to-be-treated automobiles were housed therein, it was possible to raise the temperature from 35 °C to 80 °C in about 10 minutes. Thus, even when the treatment chamber is composed of a plurality of connected units, the total treatment duration including the temperature rise and maintenance of the heat treatment temperature (60 to 80 °C) can be shortened to about (within) 30 minutes.

Furthermore, the high-temperature pest extermination device 10, in which a plurality of treatment chambers are arranged in parallel rows, preferably includes a centralized management part 70 for collectively managing the high temperature treatment by the circulation fan devices 30 of each of the treatment chambers 20L, 20L, 20L. Any known controller can be used as the centralized management part 70. The centralized management part 70 controls each corresponding circulation fan device 30 based on the vehicle interior temperature detection means 50 of each of the plurality of treatment chambers 20. In particular, when a treatment chamber 20A in which a plurality of units 20u are connected is included, each circulation fan device 30 is preferably controlled based on the chamber interior temperature detection means 25 and vehicle interior temperature detection means 50. This is because treatment at a chamber interior temperature which is managed for the treatment chamber 20A as a whole in which the units are connected, is more advantageous in terms of efficiency than managing the temperature upper limit of the high-temperature treatment for each of the plurality of to-be-treated automobiles C. Note that the centralized management part 70 may be configured to serve as the heating temperature control means 60 and heating temperature control means 60 may be additionally provided to control each high-temperature treatment based on each heating temperature control means 60. The centralized management part 70 makes it possible to easily assess the overall situation of the high-temperature treatment for a large number of to-be-treated automobiles C and to efficiently respond to the treatment situation.

Next the automobile high-temperature pest extermination method using the high-temperature pest extermination device 10 of the present invention will be described. As shown in FIG. 1, the high-temperature pest extermination method includes loading a to-be-treated automobile C into the treatment chamber 20, heating the treatment chamber 20, detecting the vehicle interior temperature by the vehicle interior temperature detection means 50 mounted inside the to-be-treated automobile C, controlling the heating temperature by the heating temperature control means 60 based on the vehicle interior temperature detection means 50, and performing the high-temperature treatment on the to-be-treated automobile C at a temperature higher than a predetermined temperature, whereby pests inside the to-be-treated automobile C are exterminated. An example of the high-temperature pest extermination method in which a single to-be-treated automobile C is treated in a single treatment chamber 20 will be described in detail below.

First, a necessary number of vehicle interior temperature detection means 50 are arranged, in advance, in positions which are relatively resistant to heating, such as under the seat or within the engine compartment of the to-be-treated automobile C. In the example illustrated in FIG. 1, an engine compartment vehicle interior temperature detection means 50a, an under-seat vehicle interior temperature detection means 50b, and a trunk compartment vehicle interior temperature detection means 50c are arranged. Furthermore, the temperature conditions and treatment duration of the high-temperature treatment by the circulation fan device 30 are set by the heating temperature control means 60. The conditions of the high-temperature treatment include a temperature upper limit of 75 °C, a treatment temperature of 60 °C, and a treatment duration of 10 minutes.

After the high-temperature treatment has been set, the to-be-treated automobile C is loaded into the treatment chamber 20 by self-propulsion or by a conveyor. The doors, hood, trunk lid, etc., of the to-be-treated automobile C loaded into the treatment chamber 20 are opened to allow air to flow into the passenger compartment, the engine compartment, the trunk, etc. Subsequently, the inlet 22 of the treatment chamber 20 is closed, closing the interior of the chamber, and heating in the treatment chamber 20 by the circulation fan device 30 is started. The circulation fan device 30 circulates heated air in the horizontal directions of the treatment chamber 20 by the fan member 35.

In particular, air inside the treatment chamber 20 is suctioned by the fan member 35 through the front of the circulation fan device 30, and the suctioned air is heated by the heating members 40 within the housing member 31. The air heated in this way is discharged as heated air into the treatment chamber 20 from the discharge parts 33 on both sides of the circulation fan device 30. At this time, since the discharge parts 33 are formed by opening the entirety of the sides of the circulation fan device 30, the discharged heated air circulates through the treatment chamber 20 in the horizontal directions. The heated air discharged from the sides of the circulation fan device 30 circulates from the third side wall part 21c side to the fourth side wall part 21d side along the side wall parts of the first side wall part 21a side and the second side wall part 21b side. Further, the heated air on both sides collides in the central part of the fourth side wall part 21d, circulates in the central direction of the treatment chamber 20, and is suctioned into the circulation fan device 30 by the fan member 35 of the circulation fan device 30. Thus, the circulation of the heated air in the horizontal directions along both the left and right side wall parts 21 within the treatment chamber 20 is repeated. As a result, the interior of the treatment chamber 20 can be efficiently heated. Furthermore, heated air can be effectively brought into contact with the interior and exterior of a box-type automobile having a floor plate and a roof plate.

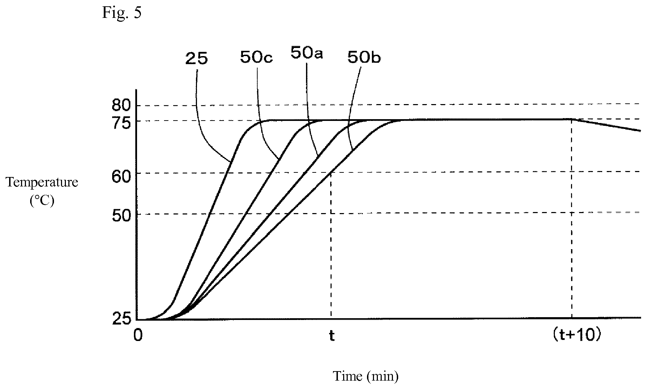

In the heating by the circulation fan device 30, the interior of the treatment chamber 20 is entirely heated so that the interior of the to-be-treated automobile C loaded into the treatment chamber 20 is gradually heated. The graph of FIG. 5 shows the temperature change by the circulation fan device 30. In the graph of FIG. 5, the temperature changes of the chamber interior temperature (vehicle external temperature) detected by the chamber interior temperature detection means 25, a first vehicle interior temperature detected by the engine compartment vehicle interior temperature detection means 50a, a second vehicle interior temperature detected by the under-seat vehicle interior temperature detection means 50b, and a third vehicle interior temperature detected by the trunk vehicle interior temperature detection means 50c are shown.

As shown in FIG. 5, as the chamber interior temperature (refer to reference numeral 25) rises, the vehicle interior temperatures rise (reference numerals 50a, 50b, 50c). Operation of the circulation fan device 30 is controlled by the heating temperature control means 60 so that the chamber interior temperature is maintained at the temperature upper limit (75 °C in this example) based on the chamber interior temperature detected by the chamber interior temperature detection means 25. This is a measure to prevent damage or the like from occurring in the to-be-treated automobile C when the chamber interior temperature is higher than 80 °C.

As shown in FIG. 5, the vehicle interior temperature rises over time as the temperature of the exterior of the vehicle rises. By maintaining the chamber interior temperature at the temperature upper limit (75 °C), the increased vehicle interior temperature can reach the treatment temperature (60 °C in this example) of the high-temperature treatment. The change in the vehicle interior temperature differs depending on the position in the to-be-treated automobile C. Thus, the time to reach the treatment temperature (60 °C) of the high-temperature treatment also is not the same for each position. In the example shown in FIG. 5, the vehicle interior temperature (50c) of the trunk first reaches the treatment temperature, and then the engine compartment vehicle interior temperature (50a) and the under-seat vehicle interior temperature (50b) reach the treatment temperature in this order. Among the plurality of vehicle interior temperature detection means (50a, 50b, 50c), the time (t) at which the temperature reaches the treatment temperature (60 ° C) last is defined as the high-temperature treatment start time.

The position which reaches the treatment temperature last is presumed to be the position within the to-be-treated automobile C at which the temperature is lowest. Thus, when this position reaches the treatment temperature, it can be considered that the entire to-be-treated automobile C has reached the treatment temperature or higher and the entire to-be-treated automobile C is in a state in which the high-temperature treatment can be appropriately performed. Thus, by using this time (t) as the high-temperature treatment start time, the to-be-treated automobile C can be subjected to the high-temperature treatment without issue.

The high-temperature treatment is maintained in a high-temperature state at the treatment temperature (60 °C) or higher from the start time (t) until the set duration (10 minutes in this example) has elapsed. During the high-temperature treatment, the chamber interior temperature is maintained at the temperature upper limit (75 °C). As a result, the vehicle interior temperature of the to-be-treated automobile C rises within the range of the chamber interior temperature (75 °C) or less even after reaching the treatment temperature (60 °C). Thus, the vehicle interior temperature docs not reach a high temperature greater than 80 °C, whereby adverse effects on the to-be-treated automobile C due to the high temperature can be prevented. During the high-temperature treatment (10 minutes), the vehicle interior temperature and the vehicle exterior temperature (chamber interior temperature) are continuously maintained at 50 °C (60 °C in this example) or higher, a temperature at which pests are killed. Thus, pests adhering to the to-be-treated automobile C can be reliably exterminated.

After the treatment duration (t + 10 minutes) of the high-temperature treatment has elapsed, the circulation fan device 30 stops and the inlet 22 and outlet 23 of the treatment chamber 20 open, whereby the to-be-treated automobile C is gradually cooled. After gradual cooling of the to-be-treated automobile C has been carried out as necessary, a new untreated to-be-treated automobile C is loaded, and the same process is then repeated.

Next, a high-temperature pest extermination method in which a high-temperature pest extermination device 10 in which a plurality of connected treatment chambers 20 are arranged in a plurality of rows is used will be described. As shown in FIG. 4, in this high-temperature pest extermination method, a plurality of to-be-treated automobiles C in which vehicle interior temperature detection means 50 have been appropriately arranged are appropriately loaded into the treatment chambers 20L, 20L, 20L. After the necessary number of loadings has been completed, the treatment chambers 20L, 20L, 20L are closed. Thereafter, heating by the circulation fan devices 30 of the respective treatment chambers 20 is started by the control of the centralized management part 70.

The centralized management part 70 controls the operation of each of the circulation fan devices 30 so as to maintain all of the chamber interior temperatures at the temperature upper limit (75 °C) or less based on the chamber interior temperature detected by the chamber interior temperature detection means 25 of each treatment chamber 20. Furthermore, the vehicle interior temperatures of the to-be-treated automobiles C rise over time as the chamber interior temperatures rise. The centralized management part 70 performs control of the circulation fan devices 30 of the plurality of treatment chambers arranged in parallel rows 20L, 20L, 20L based on the vehicle interior temperature detection means 50 for each row. In other words, each treatment chamber 20L, 20L, 20L is controlled so that high-temperature treatment is performed from the time any of the plurality of vehicle interior temperature detection means 50 last reaches the treatment temperature (60 ° C) until the set treatment duration (10 minutes) has elapsed.

In each row, gradual cooling of the to-be-treated automobile C is sequentially performed from the treatment chamber 20 L in the row in which the treatment duration of high-temperature treatment has elapsed, and the replacement with new untreated to-be-treated automobiles C is performed. Thereafter, the same steps are repeated. Thus, when the high-temperature treatments by each of the circulation fan devices 30 of the plurality of treatment chambers arranged in parallel rows 20L, 20L, 20L are collectively managed by the centralized management part 70, high-temperature treatment can be appropriately performed for more to-be-treated automobiles C and management of a plurality of high-temperature treatments is simplified, whereby treatment efficiency is improved.

As illustrated and described above, the automobile high-temperature pest extermination device of the present invention includes a circulation fan device arranged in the treatment chamber, the suction part of which is oriented toward the inside of the treatment chamber, a heating member mounted in the discharge part of the circulation fan device, and a rectification member for adjusting the flow direction of the heated air delivered into the chamber via the heating member. Thus, pests can be extermination by the high-temperature treatment and it is not necessary to use a conventional fumigating agent, whereby adverse effects such as residual fumigation agent within the to-be-treated automobile can be prevented. Furthermore, by providing a circulation fan device and heating member within the treatment chamber and circulating and distributing the heated air, the overall efficiency of the treatment including the temperature rise to the pest extermination temperature and maintenance thereof can be greatly improved, whereby cost can be reduced.

### INDUSTRIAL APPLICABILITY

Since the automobile high-temperature pest extermination device of the present invention comprises a circulation fan device and a heating member within the treatment chamber and the heated air is circulated and distributed, in addition to efficient high-temperature treatment, as described in the Examples, by connecting a plurality of treatment chambers, thermal treatment of a large number of different types of to-be-treated automobiles can be efficiently performed and adaptation to mass treatment and the size of the installation location becomes easy, whereby versatility is improved. Thus, the present invention has high industrial applicability.

### REFERENCE SIGNS LIST

- 10: automobile high-temperature pest extermination device
- 20: treatment chamber
- 20A: plurality of connected treatment chambers
- 20L: plurality of treatment chambers arranged in parallel
- 20u: unit
- 21: side wall part
- 21a: first side wall part
- 21b: second side wall part
- 21c: third side wall part
- 21d: fourth side wall part
- 22: inlet
- 22a: loading door part
- 23: outlet
- 23a: discharge door part
- 25: chamber interior temperature detection means
- 30: circulation fan device
- 31: housing member
- 32: suction part
- 33: discharge part
- 35: fan member
- 40: heating member
- 41: piping member
- 45: rectification member
- 46: rectification member wind direction restriction part
- 47, 48: rectification member wind direction auxiliary part
- 49: rectification member wind receiving surface
- 50, 50a, 5b, 5c: vehicle interior temperature detection means
- 60: heating temperature control means
- 70: centralized management part
- C, C1, C2, C3: to-be-treated automobile
- t: high-temperature treatment start time

### [OBJECT]

To provide an automobile high-temperature pest extermination device which can efficiently exterminate pests by a high-temperature treatment without the use of a fumigation agent.

## Claims

1. An automobile high-temperature pest extermination device (10), configured to apply, for a predetermined interval, heated air which has been heated to a pest extermination temperature to a to-be-treated automobile which is housed in a freely accessible manner in a treatment chamber to exterminate pests inside the automobile, comprising:
a treatment chamber (20) including an inlet (22) and an outlet (23), which comprise openable and closable door parts (22a, 23a), the treatment chamber (20) being configured that in its inside heated air which has been heated to a pest extermination temperature is applied to an enclosed space in which a to-be-treated automobile (C) is self-propelled and accommodated,
a circulation fan device (30) arranged in the treatment chamber (20), and including a suction part (32), a discharge part (33), and a fan member (35), the fan member (35) comprising a large propeller fan, and the front side of the fan member (35) being oriented toward the inside of the treatment chamber (20), the circulation fan device (30) being configured so that air in the treatment chamber (20) is suctioned from the front side thereof via the suction part (32), and the suctioned air is discharged in both side directions via the discharge part (33) on the rear surface of the fan member (35), and so that an air speed of the heated air from preferred 4 to 7 m/sec is provided,
a heating member (40) mounted in the discharge part (33) of the circulation fan device (30), the heating member (40) being configured to heat discharged air,
a rectification member (45) for adjusting, in the horizontal direction, the flow direction of the heated air delivered into the chamber (20) via the heating member (40),
chamber interior temperature detection means (25) configured to detect a chamber interior temperature of the treatment chamber (20),
vehicle interior temperature detection means (50) configured to detect a vehicle interior temperature of the to-be-treated automobile (C), and
heating temperature control means (60) configured to control a heating temperature of air discharged from the circulation fan device (30) and a treatment time based on the chamber interior temperature detection means (50) and the vehicle interior temperature detection means (25).

2. The automobile high-temperature pest extermination device (10) according to claim 1, wherein a plurality of treatment chambers (20A) are connected in series as a connectable treatment unit so as to house a plurality of to-be-treated automobiles (C1, C2, C3) therein.

3. The automobile high-temperature pest extermination device (10) according to claim 2, wherein a plurality of the treatment chambers (20C), which are connected in series, are arranged in parallel rows.

4. The automobile high-temperature pest extermination device (10) according to claim 2 or 3, comprising a centralized management part (70) for collectively managing the operations of the plurality of treatment chambers (20A, 20C).

## Patentansprüche

1. Automobil-Hochtemperatur-Schädlingsbekämpfungsvorrichtung (10), die so konfiguriert ist, dass sie für einen vorbestimmten Zeitraum eine erwärmte Luft, die auf eine Schädlingsbekämpfungstemperatur erwärmt worden ist, auf ein zu behandelndes Automobil aufbringt, das frei zugänglich in einer Behandlungskammer untergebracht ist, um Schädlinge im Inneren des Automobils zu bekämpfen, umfassend:
eine Behandlungskammer (20) mit einem Einlass (22) und einem Auslass (23), die zu öffnende und zu schließende Türteile (22a, 23a) haben, wobei die Behandlungskammer (20) so ausgestaltet ist, dass in ihrem Inneren erwärmte Luft, die auf eine Schädlingsbekämpfungstemperatur erwärmt wurde, auf einen geschlossenen Raum angewendet wird, in dem ein zu behandelndes Automobil (C) selbstfahrend und untergebracht ist,
eine Umwälzgebläsevorrichtung (30), die in der Behandlungskammer (20) angeordnet ist und ein Ansaugteil (32), ein Ausstoßteil (33) und ein Gebläseelement (35) hat, wobei das Gebläseelement (35) einen großen Propellerlüfter umfasst und die Vorderseite des Gebläseelements (35) in Richtung der Innenseite der Behandlungskammer (20) ausgerichtet ist, wobei die Umwälzgebläsevorrichtung (30) so konfiguriert ist, dass Luft in der Behandlungskammer (20) von deren Vorderseite über das Ansaugteil (32) angesaugt wird und die angesaugte Luft über das Ausstoßteil (33) an der Rückseite des Gebläseelements (35) in beide Seitenrichtungen ausgestoßen wird, und so, dass eine Luftgeschwindigkeit der erwärmten Luft von bevorzugt 4 bis 7 m/sec bereitgestellt wird,
ein Heizelement (40), das in dem Ausstoßteil (33) der Umwälzgebläsevorrichtung (30) angebracht ist, wobei das Heizelement (40) so konfiguriert ist, dass es ausgestoßene Luft erwärmt,
ein Gleichrichtungselement (45), um die Strömungsrichtung der über das Heizelement (40) in die Kammer (20) zugeführten erwärmten Luft in horizontaler Richtung einzustellen,
einem Kammerinnentemperaturerfassungsmittel (25), das konfiguriert ist, eine Kammerinnentemperatur der Behandlungskammer (20) zu erfassen,
eine Fahrzeuginnentemperatur-Erfassungseinrichtung (50), die konfiguriert ist, eine Fahrzeuginnentemperatur des zu behandelnden Automobils (C) zu erfassen, und
eine Heiztemperatur-Steuereinrichtung (60), die so konfiguriert ist, dass sie eine Heiztemperatur der von der Umwälzgebläsevorrichtung (30) abgegebenen Luft und eine Behandlungszeit ausgehend von der Kammerinnentemperatur-Erfassungseinrichtung (50) und der Fahrzeuginnentemperatur-Erfassungseinrichtung (25) steuert.

2. Automobil-Hochtemperatur-Schädlingsbekämpfungsvorrichtung (10) nach Anspruch 1, wobei mehrere Behandlungskammern (20A) als eine verbindbare Behandlungseinheit in Reihe geschaltet sind, um darin mehrere zu behandelnde Automobile (C1, C2, C3) unterzubringen.

3. Automobil-Hochtemperatur-Schädlingsbekämpfungsvorrichtung (10) nach Anspruch 2, wobei eine Mehrzahl der in Reihe geschalteten Behandlungskammern (20C) in parallelen Reihen angeordnet sind.

4. Automobil-Hochtemperatur-Schädlingsbekämpfungsvorrichtung (10) nach Anspruch 2 oder 3, mit einem zentralen Verwaltungsteil (70) zum kollektiven Verwalten des Betriebs der mehreren Behandlungskammern (20A, 20C).

## Revendications

1. Dispositif d'extermination d'insectes nuisibles à haute température pour automobile (10) configuré pour appliquer, pendant un intervalle prédéterminé, de l'air chauffé qui a été chauffé à une température d'extermination d'insectes nuisibles sur une automobile à traiter, qui est logé d'une manière librement accessible dans une chambre de traitement pour exterminer les insectes nuisibles à l'intérieur de l'automobile, comprenant :
une chambre de traitement (20) comprenant une entrée (22) et une sortie (23) qui comprennent des parties de porte pouvant s'ouvrir et se fermer (22a, 23a), la chambre de traitement (20) étant configurée de sorte que, dans son intérieur, l'air chauffé qui a été chauffé à une température d'extermination d'insectes nuisibles, est appliqué sur un espace clos dans lequel une automobile à traiter (C) est autopropulsée et logée,
un dispositif de ventilateur de circulation (30) agencé dans la chambre de traitement (20) et comprenant une partie d'aspiration (32), une partie de décharge (33) et un élément de ventilateur (35), l'élément de ventilateur (35) comprenant un grand ventilateur à hélice, et le côté avant de l'élément de ventilateur (35) étant orienté vers l'intérieur de la chambre de traitement (20), le dispositif de ventilateur de circulation (30) étant configuré de sorte que l'air, dans la chambre de traitement (20), est aspiré de son côté avant via la partie d'aspiration (32), et l'air aspiré est déchargé dans deux directions latérales via la partie de décharge (33) sur la surface arrière de l'élément de ventilateur (35), et de sorte qu'une vitesse d'air de l'air chauffé de 4 à 7 m/sec de préférence, est fournie,
un élément chauffant (40) monté dans la partie de décharge (33) du dispositif de ventilateur de circulation (30), l'élément chauffant (40) étant configuré pour chauffer l'air déchargé,
un élément de rectification (45) pour ajuster, dans la direction horizontale, la direction d'écoulement de l'air chauffé distribué dans la chambre (20) via l'élément chauffant (40),
un moyen de détection de température intérieure de chambre (25) configuré pour détecter une température intérieure de chambre de la chambre de traitement (20),
un moyen de détection de température intérieure de véhicule (50) configuré pour détecter une température intérieure de véhicule de l'automobile à traiter (C), et
un moyen de régulation de température de chauffage (60) configuré pour réguler une température de chauffage de l'air déchargé par le dispositif de ventilateur de circulation (30) et un temps de traitement basé sur le moyen de détection de température intérieure de chambre (50) et le moyen de détection de température intérieure de véhicule (25).

2. Dispositif d'extermination d'insectes nuisibles à haute température pour automobile (10) selon la revendication 1, dans lequel une pluralité de chambres de traitement (20A) sont raccordées en série en tant qu'unité de traitement raccordable afin d'y loger une pluralité d'automobiles à traiter (C1, C2, C3).

3. Dispositif d'extermination d'insectes nuisibles à haute température pour automobile (10) selon la revendication 2, dans lequel une pluralité de chambres de traitement (20C) qui sont raccordées en série, sont agencées dans des rangées parallèles.

4. Dispositif d'extermination d'insectes nuisibles à haute température pour automobile (10) selon la revendication 2 ou 3, comprenant une partie de gestion centralisée (70) pour gérer collectivement les opérations de la pluralité de chambres de traitement (20A, 20C).
